# EUROPEAN PATENT SPECIFICATION

(11) **EP 3 447 990 B1**
(45) Date of publication and mention of the grant of the patent: **01.06.2022**
(21) Application number: 17830249.3
(22) Date of filing: 18.04.2017
(51) Int. Cl.: H04L 29/06, H04L 29/08, H04W 48/16

(54) **INFORMATION TRANSMISSION METHOD AND DEVICE**
INFORMATIONSÜBERTRAGUNGSVERFAHREN UND -VORRICHTUNG
PROCÉDÉ ET DISPOSITIF DE TRANSMISSION D'INFORMATIONS

(30) Priority: 22.07.2016 WO PCT/CN2016/091030
(43) Date of publication of application: 27.02.2019
(73) Proprietor: GUANGDONG OPPO MOBILE TELECOMMUNICATIONS CORP., LTD., Wusha, Chang'an Dongguan, Guangdong 523860 (CN)
(72) Inventor: YANG, Ning, Dongguan Guangdong 523860 (CN); TANG, Hai, Dongguan Guangdong 523860 (CN)
(74) Representative: Manitz Finsterwald Patent- und Rechtsanwaltspartnerschaft mbB
(86) International application number: PCT/CN2017/080925
(87) International publication number: WO 2018/014611

(56) References cited:
- EP-A1- 2 866 369
- EP-A2- 2 501 175
- WO-A1-2010/105812
- WO-A2-2011/119680
- CN-A- 102 204 217
- CN-A- 103 580 791
- CN-A- 105 722 066
- GB-A- 2 502 304
- KR-A- 20150 015 855
- US-A1- 2012 076 117
- US-A1- 2015 223 158

## Description

### TECHNICAL FIELD

The disclosure relates to the field of communications, and more particularly to a method and device for information transmission. The features of the preamble of the independent claims are known from US 2012/076117 A1. Further prior art is described in WO 2011/119680 A2, EP 2866369 A1, GB 2502304 A, US 2015/223158 A1 and WO 2010/105812 A1.

### BACKGROUND

In an existing wireless communication system, different terminal devices have different capabilities (i.e., having different features or supporting different services) and different network devices also have different capabilities. In such case, a terminal device may not reside in a cell suitable for it to reside and initiate a corresponding service without knowing capability information of a network device. For example, the terminal network selects a cell with maximum signal strength according to an existing cell reselection rule, while a network device of the cell may not support a carrier aggregation feature, and thus the terminal device may not use the carrier aggregation feature.

Therefore, after a terminal device establishes a connection with a serving cell, network capability information of a network device in a neighbor cell may be periodically broadcast through system information, and then the terminal device may select a cell matched with its capability for reside. However, such a transmission mode for the capability information is relatively low in transmitting efficiency, high in signaling overhead and serious in resource waste.

### SUMMARY

Embodiments of the disclosure provide a method and device for information transmission, which may reduce a signaling overhead, thereby avoiding resource waste. The present invention is defined in the independent claims.

According to a first aspect, the disclosure provides a method for information transmission, which may include the following operations. A first network device sends network capability information of at least one network device to a terminal device. The at least one network device includes at least one of the first network device or a network device connected with the first network device.

In some possible implementation modes of the first aspect, it is to be understood that the network capability information is configured to indicate at least one of a service or feature that the at least one network device is capable of supporting.

In the embodiments of the disclosure, the first network device may send at least one of its own network capability information or network capability information of at least one network device connected with the first network device to the terminal device, the terminal device may directly receive the network capability information of the at least one network device from the first network device, and the network capability information is not required to be periodically broadcast through system information for a long time. Therefore, sending efficiency of the network capability information may be improved and a signaling overhead may be reduced, so that a resource utilization rate is increased.

It is to be understood that the network capability information of the at least one network device may be at least one network capability information corresponding to the number of the at least one network device, i.e., the network capability information of each network device in the at least one network device. The network capability information of the at least one network device may be network capability information shared by the at least one network device. There are no limits made thereto in the embodiments of the disclosure.

In a first possible implementation mode of the first aspect, the network capability information of the at least one network device may be network capability information required by realization of a related feature or implementation of a related service by the terminal device. The operation that the first network device sends the network capability information of the at least one network device to the terminal device may include the following actions. The first network device sends the network capability information, required by the terminal device, of the at least one network device to the terminal device according to information (e.g., subscription information) of the terminal device. The information of the terminal device includes at least one of service requirement information or user profile information of the terminal device and the network capability information of the at least one network device is requested by at least one of the service requirement information or user profile information of the terminal device.

In the embodiments of the disclosure, before sending the network capability information of the at least one network device to the terminal device, the first network device may determine at least one of the service requirement information or user profile information of the terminal device at first according to the subscription information of the terminal device during initial access to the first network device, and then the first network device may send to the terminal device the network capability information, requested by at least one of the service requirement information or user profile information of the terminal device, of the at least one network device according to at least one of the service requirement information or user profile information of the terminal device. In such a manner, all network capability information of network devices owned by the first network device is not required to be sent to the terminal device, but only the network capability information of the at least one network device required by the terminal device is sent to the terminal device. Therefore, it may be ensured as much as possible that the network capability information sent to the terminal device by the first network device is related to the terminal device, such that the signaling overhead is further reduced.

In combination with the abovementioned possible implementation mode of the first aspect, in a second possible implementation mode of the first aspect, before the operation that the first network device sends the network capability information of the at least one network device to the terminal device, the method may further include that the first network device receives a first message sent by the terminal device. The first message is configured to request for the network capability information of the at least one network device. The operation that the first network device sends the network capability information of the at least one network device to the terminal device may include that: after the first message is received, the first network device sends the network capability information of the at least one network device to the terminal device.

In the embodiments of the disclosure, a procedure of sending the network capability information may be triggered by the terminal device. The terminal device may send the first message to the first network device to request the first network device to send the network capability information. After receiving the first message, the first network device may send the network capability information of the at least one network device to the terminal device according to the first message.

In an optional embodiment, the first message may be an Attach Request, Tracking Area Update Request (TAU Request) or the like of a Non-Access Stratum (NAS) and may also be a connection establishment related message, reestablishment related message, reconfiguration message or the like of an Access Stratum (AS). There are no limits made thereto in the embodiments of the disclosure.

In combination with the first aspect or any abovementioned possible implementation mode thereof, in a third possible implementation mode of the first aspect, the first message may carry terminal capability information of the terminal device and the terminal capability information may be configured to indicate at least one of a service or feature which is required to be supported or may be supported by the terminal device. The operation that the first network device sends the network capability information of the at least one network device to the terminal device may include that after the terminal capability information is received, the first network device sends to the terminal device network capability information, requested by the terminal capability information, of the at least one network device.

In the embodiments of the disclosure, the terminal device may directly carry the terminal capability information of the terminal device in the first message, namely reporting a capability of the terminal device to the first network device. Then, the first network device receives the first message including the terminal capability information and may only send the network capability information requested by the terminal capability information to the terminal device according to the terminal capability information. In such a manner, the network capability information is sent according to a request of the terminal device. Therefore, the signaling overhead may be reduced to a greater extent and the resource utilization rate may be increased.

In combination with the first aspect or any abovementioned possible implementation mode thereof, in a fourth implementation mode of the first aspect, the first message may be sent when the terminal device accesses the first network device for the first time.

In an optional embodiment, the first message may be an initial access message and the initial access message is configured to indicate that the terminal device initially accesses the first network device. The operation that the first network device sends the network capability information of each network device includes that after the initial access message is received, the first network device sends network capability information of each network device to the terminal device.

In combination with the first aspect or any abovementioned possible implementation mode thereof, in a fifth implementation mode of the first aspect, the at least one network device may include a network device covering a first area.

It is to be understood that the first area is a specific area within network coverage of a certain number of network devices including the first network device.

It is also to be understood that a network capability corresponding to a carrier in the area is a static network capability or a semistatic network capability. The static network capability indicates that the service and/or feature supported by the at least one network device are kept unchanged for a long time. The semistatic network capability indicates that the service and/or feature supported by the at least one network device are kept unchanged in a first time period.

In combination with the first aspect or any abovementioned possible implementation mode thereof, in a sixth implementation mode of the first aspect, the first area may be a location area, the at least one network device may include the first network device and the location area may be configured to determine a range of the area where the terminal device is located to page the terminal device.

In the embodiments of the disclosure, the location area is an area defined in a Long Term Evolution (LTE) system, which is a set of a group of cells and is an important part of mobility management of the terminal device. The location area is set to enable a mobile switch or a mobile switching center to timely know a location of the terminal device. When the terminal device is paged, the mobile switching center (MSC) searches all cells in the location area of the terminal device. Therefore, the terminal device may be found rapidly and accurately.

In an optional embodiment, the first area may also be any area newly defined in a future network. There are no limits made thereto in the embodiments of the disclosure.

In combination with the first aspect or any abovementioned possible implementation mode thereof, in a seventh implementation mode of the first aspect, the first message may be a location updating message and the location updating message may be configured to indicate that the terminal device moves from a second area to the first area. The operation that the first network device sends the network capability information of the at least one network device to the terminal device may include that: after the location updating message is received, the first network device sends the network capability information of the at least one network device to the terminal device.

In combination with the first aspect or any abovementioned possible implementation mode thereof, in an eighth implementation mode of the first aspect, the operation that the first network device sends the network capability information of the at least one network device to the terminal device may include that: the first network device sends the network capability information of the at least one network device to the terminal device in a unicast, multicast or broadcast manner.

In combination with the first aspect or any abovementioned possible implementation mode thereof, in a ninth implementation mode of the first aspect, before the operation that the first network device sends the network capability information of the at least one network device to the terminal device, the method may further include the following operation. The first network device receives the network capability information from network devices connected with the first network device in the at least one network device, respectively.

In combination with the first aspect or any abovementioned possible implementation mode thereof, in a tenth implementation mode of the first aspect, the method may further include that: the first network device sends the network capability information of the first network device to a second network device in the at least one network device.

It is to be understood that the mutually connected network devices may send their own network capability information to each other, such that after the terminal device accesses one network device, the network device accessed by the terminal device may have the network capability information of the other network devices, thereby sending its own network capability information and the network capability information of the network devices connected therewith to the terminal device.

In combination with the first aspect or any abovementioned possible implementation mode thereof, in an eleventh implementation mode of the first aspect, the network capability information of the at least one network device may further include mapping information. The mapping information may be configured to indicate at least one of the following: a correspondence between at least one of a carrier frequency of the at least one network device or an identifier of the at least one network device and at least one of the service or the feature, or a correspondence between at least one of the carrier frequency of the at least one network device or the identifier of the at least one network device and configuration information of at least one of the service or the feature.

It is to be understood that the correspondence may be a correspondence between the carrier frequency of the at least one network device and the service and/or the feature, may be a correspondence between the identifier of the at least one network device and the service and/or the feature, may be a correspondence between the carrier frequency of the at least one network device and the configuration information of the service and/or the feature and may also be a correspondence between the identifier of the at least one network device and the configuration information of the service and/or the feature. There are no limits made thereto in the embodiments of the disclosure.

In combination with the first aspect or any abovementioned possible implementation mode thereof, in a twelfth implementation mode of the first aspect, the first network device may be a core network device or an access network device.

In combination with the first aspect or any abovementioned possible implementation mode thereof, in a thirteenth implementation mode of the first aspect, the service may include at least one of the following: a broadcast/multicast service, a Voice over LTE (VoLTE) service or a Device to Device (D2D) service. The feature may include at least one of the following: a carrier aggregation feature, a Licensed-Assisted Access (LAA) feature, a dual connectivity feature or a local/base station cache feature.

According to a second aspect, the disclosure provides a method for information transmission, which may include the following operations. A terminal device receives network capability information of at least one network device from a first network device. The at least one network device includes at least one of the first network device or a network device connected with the first network device.

In some possible implementation modes of the second aspect, it is to be understood that the network capability information is configured to indicate at least one of a service or feature that the at least one network device is capable of supporting.

In a first possible implementation mode of the second aspect, the operation that the terminal device receives the network capability information of the at least one network device from the first network device may include that: the terminal device receives the network capability information, sent by the first network device according to information (e.g., subscription information) of the terminal device, of the at least one network device. The information of the terminal device includes at least one of service requirement information or user profile information of the terminal device and at least one of a service or feature corresponding to the network capability information of the at least one network device is requested by at least one of the service requirement information or user profile information of the terminal device.

In combination with the aspect or any abovementioned possible implementation mode thereof, in a second possible implementation mode of the second aspect, before the operation that the terminal device receives the network capability information of the at least one network device from the first network device, the method may further include that the terminal device sends a first message to the first network device, wherein the first message is configured to request for the network capability information of the at least one network device, The operation that the terminal device receives the network capability information of the at least one network device from the first network device may include that: the terminal device receives the network capability information of the at least one network device that is , sent by the first network device after the first message is received.

In combination with the second aspect or any abovementioned possible implementation mode thereof, in a third possible implementation mode of the second aspect, the first message may carry terminal capability information of the terminal device and the terminal capability information may be configured to indicate at least one of a service or feature which is required to be supported or may be supported by the terminal device. The operation that the terminal device receives the network capability information of the at least one network device from the first network device may include that: the terminal device receives the network capability information, sent by the first network device after the terminal capability information is received, of the at least one network device.

In combination with the second aspect or any abovementioned possible implementation mode thereof, in a fourth implementation mode of the second aspect, the at least one network device may include a network device covering a first area.

In combination with the second aspect or any abovementioned possible implementation mode thereof, in a fifth implementation mode of the second aspect, the first area may be a location area, the at least one network device may include the first network device and the location area may be configured to determine a range of the area where the terminal device is located to page the terminal device.

In combination with the second aspect or any abovementioned possible implementation mode thereof, in a sixth implementation mode of the second aspect, the first message may be a location updating message and the location updating message may be configured to indicate that the terminal device moves from a second area to the first area. The operation that the terminal device receives the network capability information of the at least one network device from the first network device may include that: the terminal device receives the network capability information, sent by the first network device after the location updating message is received, of the at least one network device.

In combination with the second aspect or any abovementioned possible implementation mode thereof, in a seventh implementation mode of the second aspect, the operation that the terminal device receives the network capability information of the at least one network device from the first network device may include that: the terminal device receives the network capability information of the at least one network device that is sent by the first network device in a unicast, multicast or broadcast manner.

In combination with the second aspect or any abovementioned possible implementation mode thereof, in an eighth implementation mode of the second aspect, after the operation that the terminal device receives the network capability information of the at least one network device from the first network device, the method may further include that: responsive to determining that the terminal device moves to a coverage of the second network device in the at least one network device, the terminal device determines whether to reside in a cell to which the second network device belongs according to network capability information of the second network device.

In combination with the second aspect or any abovementioned possible implementation mode thereof, in a ninth implementation mode of the second aspect, the network capability information of the at least one network device may further include mapping information. The mapping information may be configured to indicate at least one of the following: a correspondence between at least one of a carrier frequency of the at least one network device or an identifier of the at least one network device and at least one of the service or the feature, or a correspondence between at least one of the carrier frequency of the at least one network device or the identifier of the at least one network device and configuration information of at least one of the service or the feature.

In combination with the second aspect or any abovementioned possible implementation mode thereof, in a tenth implementation mode of the second aspect, the first network device may be a core network device or an access network device.

In combination with the second aspect or any abovementioned possible implementation mode thereof, in an eleventh implementation mode of the second aspect, the service may include at least one of the following: a broadcast/multicast service, a VoLTE service or a D2D service, and the feature may include at least one of the following: a carrier aggregation feature, an LAA feature, a dual connectivity feature or a local/base station cache feature.

According to a third aspect, the disclosure provides a device for information transmission, which is configured to execute the method in the first aspect or any possible implementation mode of the first aspect. Specifically, the device includes units configured to execute the method in the first aspect or any possible implementation mode of the first aspect.

According to a fourth aspect, the disclosure provides a device for information transmission, which is configured to execute the method in the second aspect or any possible implementation mode of the second aspect. Specifically, the device includes units configured to execute the method in the second aspect or any possible implementation mode of the second aspect.

According to a fifth aspect, the disclosure provides a device for information transmission, which includes a receiver, a sender, a memory, a processor and a bus system. The receiver, the sender, the memory and the processor are connected through the bus system. The memory is configured to store an instruction. The processor is configured to execute the instruction stored in the memory to control the receiver to receive signals and control the sender to send signals. When the processor executes the instruction stored in the memory, such execution enables the processor to execute the method in the first aspect or any possible implementation mode of the first aspect.

According to a sixth aspect, the disclosure provides a device for information transmission, which includes a receiver, a sender, a memory, a processor and a bus system. The receiver, the sender, the memory and the processor are connected through the bus system. The memory is configured to store an instruction. The processor is configured to execute the instruction stored in the memory to control the receiver to receive signals and control the sender to send signals. When the processor executes the instruction stored in the memory, such execution enables the processor to execute the method in the second aspect or any possible implementation mode of the second aspect.

According to a seventh aspect, the disclosure provides a system for information transmission, which includes the device in the third aspect or any possible implementation mode of the third aspect and the device in the fourth aspect or any possible implementation mode of the fourth aspect.

Alternatively, the system includes the device in the fifth aspect or any possible implementation mode of the fifth aspect and the device in the sixth aspect or any possible implementation mode of the sixth aspect.

According to an eighth aspect, the disclosure provides a computer-readable medium, which is configured to store a computer program. The computer program includes an instruction configured to execute the method in the first aspect or any possible implementation mode of the first aspect.

According to a ninth aspect provides a computer-readable medium, which is configured to store a computer program. The computer program including an instruction configured to execute the method in the second aspect or any possible implementation mode of the second aspect.

### BRIEF DESCRIPTION OF DRAWINGS

In order to describe the technical solutions of the embodiments of the disclosure more clearly, the drawings required to be used in descriptions about the embodiments or a conventional art will be simply introduced below. It is apparent that the drawings described below are only some embodiments of the disclosure. Other drawings may further be obtained by those of ordinary skill in the art according to these drawings without creative work.
FIG. 1 is a schematic flowchart of a method for information transmission according to an embodiment of the disclosure.
FIG. 2 is a schematic flowchart of a method for information transmission according to an embodiment of the disclosure.
FIG. 3 is a schematic block diagram of a device for information transmission according to an embodiment of the disclosure.
FIG. 4 is a schematic block diagram of a device for information transmission according to an embodiment of the disclosure.
FIG. 5 is a schematic block diagram of a system for information transmission according to an embodiment of the disclosure.
FIG. 6 is a schematic block diagram of a device for information transmission according to an embodiment of the disclosure.
FIG. 7 is a schematic block diagram of a device for information transmission according to an embodiment of the disclosure.

### DETAILED DESCRIPTION

The technical solutions in the embodiments of the disclosure will be clearly and completely described below in combination with the drawings in the embodiments of the disclosure. It is apparent that the described embodiments are not all embodiments but part of embodiments of the disclosure. All other embodiments obtained by those of ordinary skill in the art on the basis of the embodiments in the disclosure without creative work shall fall within the scope of protection of the disclosure.

The technical solutions of the embodiments of the disclosure may be applied to various communication systems, for example, a Global System of Mobile Communication (GSM), a Code Division Multiple Access (CDMA) system, a Wideband Code Division Multiple Access (WCDMA) system, a General Packet Radio Service (GPRS), an LTE system, an LTE Frequency Division Duplex (FDD) system, LTE Time Division Duplex (TDD), a Universal Mobile Telecommunication System (UMTS), a Worldwide Interoperability for Microwave Access (WiMAX) communication system and a communication system in the future.

In the embodiments of the disclosure, a terminal device may be called User Equipment (UE), terminal equipment, a Mobile Station (MS), a mobile terminal, a terminal device in a future 5th-Generation (5G) network or the like. The terminal device may communicate with one or more core networks through a Radio Access Memory (RAN). For example, a terminal may be a mobile phone (or called a "cellular" phone) and a computer with a mobile terminal. For example, the terminal may also be a portable, pocket, handheld, computer-embedded or vehicle-mounted mobile device and performs voice and/or data exchange with the RAN.

In the embodiments of the disclosure, a network device may be a device configured to communicate with the terminal device. The network device may be a Base Transceiver Station (BTS) in the GSM or the CDMA, may also be a NodeB (NB) in the WCDMA system, may also be an Evolutional Node B (eNB or eNodeB) in the LTE system and may further be a wireless controller in a Cloud Radio Access Network (CRAN) scenario, or the network device may be a relay station, an access point, a vehicle-mounted device, a wearable device, a network device in the future 5G network, a network device in the future evolved Public Land Mobile Network (PLMN) or the like.

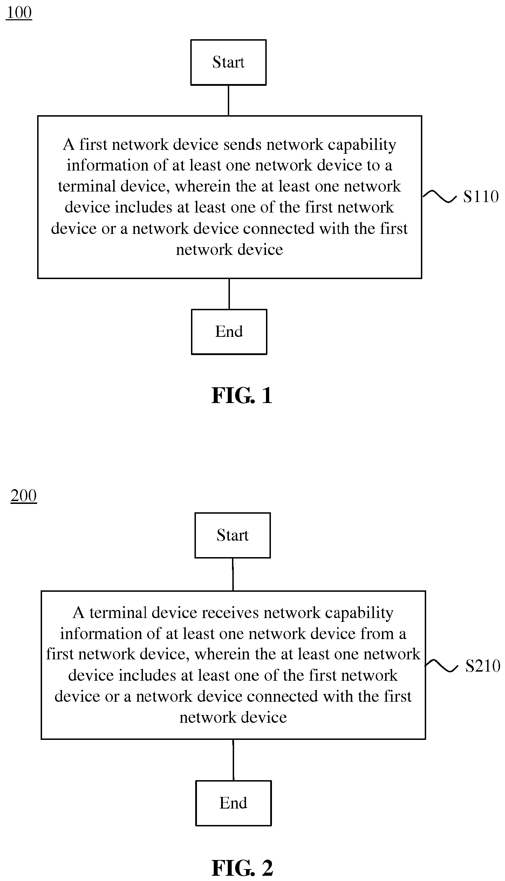

FIG. 1 is a schematic flowchart of a method 100 for information transmission according to an embodiment of the disclosure. FIG. 1 illustrates operations or actions of the method for information transmission. However, these operations or actions are only examples. Other operations or transformations of each operation in FIG. 1 may also be executed in the embodiment of the disclosure. The method 100 includes the following operations.

In S110, a first network device sends network capability information of at least one network device to a terminal device, wherein the at least one network device includes at least one of the first network device or a network device connected with the first network device.

In an optional embodiment, the network capability information of the at least one network device is configured to indicate at least one of a service or a feature which may be supported by the at least one network device.

FIG. 2 is a schematic flowchart of a method 200 for information transmission according to an embodiment of the disclosure. FIG. 2 illustrates actions or operations of the method for information transmission. However, these actions or operations are only examples. Other operations or transformations of each operation in FIG. 2 may also be executed in the embodiment of the disclosure. The method 200 includes the following operations.

In S210, a terminal device receives network capability information of at least one network device from a first network device, wherein the at least one network device includes at least one of the first network device or a network device connected with the first network device.

In an optional embodiment, the network capability information of the at least one network device is configured to indicate at least one of a service or a feature which may be supported by the at least one network device.

In such a manner, the first network device may send at least one of its own network capability information or network capability information of at least one network device connected with the first network device to the terminal device, the terminal device may directly receive the network capability information of the at least one network device from the first network device, and the network capability information is not required to be periodically broadcast through system information for a long time. Therefore, sending efficiency of the network capability information may be improved and a signaling overhead may be reduced, so that a resource utilization rate is increased.

It is to be understood that the network capability information of the at least one network device may be at least one network capability information corresponding to the number of the at least one network device, i.e., network capability information of each network device in the at least one network device. The network capability information of the at least one network device may be network capability information shared by the at least one network device. There are no limits made thereto in the embodiments of the disclosure.

It is also to be understood that the at least one network device may include the first network device and may also not include the first network device. There are no limits made thereto in the embodiments of the disclosure. In an implementation mode, the at least one network device includes the first network device and the other network devices connected with the first network device.

In an optional embodiment of the disclosure, the first network device is a core network device or an access network device.

In an optional embodiment of the disclosure, the service may include at least one of a broadcast multicast service, a Voice over LTE (VoLTE) service or a D2D service. The feature may include at least one of a carrier aggregation feature, an LAA feature, a dual connectivity feature or a local/base station cache feature.

Specifically, the broadcast multicast service may be an enhanced Multimedia Broadcast/Multicast Service (eMBMS). The VoLTE service is an Internet Protocol (IP) Multimedia Subsystem (IMS)-based voice service. The VoLTE service is an IP data transmission technology in which all services are carried on a 4th-Generation (4G) network without a 2nd-Generation (2G)/3rd-Generation (3G) network, and may implement unification of data and voice services in the same network. The Device to Device (D2D) service may refer to Vehicle to Vehicle (V2V) communication, or Vehicle to X (V2X) communication or X2X. In V2X or X2X communication, X may generally refer to any equipment with a wireless receiving and sending capability, for example but not limited to, a wireless device moving at a low speed, vehicle-mounted equipment moving at a high speed or a network control node with a wireless transmitting and receiving capability.

In addition, carrier aggregation is a transmission bandwidth increase technology. A terminal with the carrier aggregation feature may determine the largest number of carriers which may be simultaneously used for uplink and downlink transmission according to its own capability. Licensed-Assisted Access (LAA) refers to a technology for an unlicensed frequency band and may achieve a higher data transmission rate. Dual connectivity refers to a technology of simultaneously connecting a terminal to a macro base station and a cellular base station for carrier aggregation, may implement mobility management through the macro base station and simultaneously aggregate the cellular base station to provide an additional user capability, so as to increase a data throughput of a user. The local/base station cache feature refers to a technology that a network stores data of interest of the terminal in a local storage entity or a base station according to requirements of the terminal, thereby reducing a data transmission latency of the terminal.

It is to be understood that the abovementioned service and/or feature are only exemplary illustrations, and the first network device and the terminal device may have other features or support other services. There are no limits made thereto in the embodiments of the disclosure.

In an implementation mode, the operation in S110 includes that the first network device sends the network capability information of the at least one network device to the terminal device in a unicast manner.

Correspondingly, the operation in S210 includes that the terminal device receives the network capability information, sent by the first network device in the unicast manner, of the at least one network device.

Specifically, the first network device sends the network capability information of the at least one network device to the terminal device in the unicast manner. Therefore, the network device may be prevented from periodic broadcast, the resource utilization rate is increased while reducing the signaling overhead.

As an optional embodiment, the network capability information of the at least one network device is network capability information required by the terminal device. The operation in S110 includes that: the first network device sends the network capability information of the at least one network device to the terminal device according to information (for example, subscription information) of the terminal device. The information of the terminal device includes at least one of service requirement information or user profile information of the terminal device and the network capability information of the at least one network device is requested by at least one of the service requirement information or user profile information of the terminal device.

Correspondingly, the operation in S210 includes that: the terminal device receives the network capability information, sent by the first network device according to the information of the terminal device, of the at least one network device.

Specifically, before sending the network capability information of at least one network device in the at least one network device to the terminal device, the first network device may determine at least one of the service requirement information or user profile information of the terminal device at first according to the information of the terminal device during initial access to the first network device, and then the first network device may send to the terminal device the network capability information, requested by at least one of the service requirement information or user profile information of the terminal device according to at least one of the service requirement information or user profile information of the terminal device. In such a manner, all network capability information of network devices owned by the first network device is not required to be sent to the terminal device, but only the network capability information of the at least one network device required by the terminal device is sent to the terminal device. Therefore, it may be ensured as much as possible that the network capability information sent to the terminal device by the first network device is related to the terminal device, such that the signaling overhead is reduced.

It is to be understood that the terminal device may be divided into a mobile phone, a computer, a vehicle-mounted device and the like, or is divided with a finer granularity. For example, the mobile phone is divided into a smart phone and a non-smart phone according to supported features. When the first network device determines that the terminal device supports a non-smart phone service according to the information of the terminal device, the first network device may send to the terminal device network capability information of the at least one network device corresponding to the non-smart phone and may not send network capability information corresponding to the smart phone service.

As an optional embodiment, before the operation in S210, the method 200 further includes that: the terminal device sends a first message to the first network device, wherein the first message is configured to request for the network capability information of the at least one network device. Correspondingly, before the operation in S110, the method 100 further includes that the first network device receives the first message sent by the terminal device. The operation in S110 includes that: after the first message is received, the first network device sends the network capability information of the at least one network device to the terminal device. The operation in S120 includes that: the terminal device receives the network capability information of the at least one network device that is sent by the first network device after the first message is received.

Specifically, a procedure of sending the network capability information may be triggered by the terminal device. The terminal device may send the first message to the first network device to request the first network device to send the network capability information. After receiving the first message, the first network device may send the network capability information of the at least one network device to the terminal device according to the first message.

It is to be understood that, in the embodiments of the disclosure, the first network device may send the network capability information acquired by the first network device to the terminal device according to the first message and may also send the network capability information requested by at least one of the service requirement information or user profile information of the terminal device to the terminal device according to the first message and the subscription information of the terminal device, and not all the network capability information is required to be sent. Therefore, the signaling overhead is reduced. However, there are no limits made thereto in the embodiments of the disclosure.

As an optional embodiment, the first message carries terminal capability information of the terminal device and the terminal capability information is configured to indicate at least one of a service or feature which is required to be supported or may be supported by the terminal device. The operation in S110 includes that: after the terminal capability information is received, the first network device sends to the terminal device network capability information, requested by the terminal capability information, of the at least one network device.

Correspondingly, the operation in S210 includes that: the terminal device receives the network capability information of the at least one network device that is sent by the first network device after the terminal capability information is received.

Specifically, the terminal device may directly carry the terminal capability information of the terminal device in the first message, namely reporting a capability of the terminal device to the first network device. Then, the first network device receives the first message including the terminal capability information and may only send the network capability information requested by the terminal capability information to the terminal device according to the terminal capability information. In such a manner, the network capability information is sent according to a request of the terminal device. Therefore, the signaling overhead may be reduced to a greater extent and the resource utilization rate may be increased.

As an optional embodiment, the first message is sent when the terminal device accesses the first network device for the first time.

Specifically, the first message may be an Attach Request, TAU request or the like of an NAS and may also be a connection establishment related message, reestablishment related message, reconfiguration message or the like of an AS. There are no limits made thereto in the embodiments of the disclosure.

In an implementation mode, the first message is an initial access message and the initial access message is configured to indicate that the terminal device initially accesses the first network device. The operation in S110 includes that: after the initial access message is received, the first network device sends the network capability information of the at least one network device to the terminal device. Correspondingly, the operation in S210 includes that: the terminal device receives the network capability information of the at least one network device that is sent by the first network device after the initial access message is received.

Specifically, the first message is the initial access message. After the terminal device initially accesses the first network device, the terminal device may send the initial access message to the first network device, wherein the initial access message is configured to notify the first network device that the terminal device requests for the network capability information. Then, after receiving the initial access message, the first network device may send the network capability information to the terminal device.

It is to be understood that the initial access message may further include the terminal capability information of the terminal device. The first network device may determine the network capability information of the at least one network device requested by the terminal capability information according to the terminal capability information in the initial access message and then send it to the terminal device. There are no limits made thereto in the embodiments of the disclosure.

As an optional embodiment, the at least one network device includes a network device covering a first area.

Specifically, the at least one network device covers the first area. The first area is a specific area within network coverage of a certain number of network devices including the first network device.

In a specific implementation mode, when the at least one network device includes an access network device, for example, a base station, the at least one base station may cover multiple cells, for example, a first cell, a second cell and a third cell, the first area may be an area including the first cell and the second cell and the third cell belongs to another area. The first area may also be an area including the multiple cells. There are no limits made thereto in the embodiments of the disclosure.

It is to be understood that a network capability corresponding to a carrier in the area is a static network capability or a semistatic network capability. The static network capability indicates that at least one of the service or feature which may be supported by the at least one network device is kept unchanged for a long time. The semistatic network capability indicates that at least one of the service or feature which may be supported by the at least one network device is kept unchanged in a first time period.

As an optional embodiment, the first area is a location area, the at least one network device includes the first network device and the location area is configured to determine a range of the area where the terminal device is located to page the terminal device.

Specifically, the location area is an area defined in an LTE system, which is a set of a group of cells and is an important part of mobility management of the terminal device. The location area is set to enable a mobile switch or a mobile switching center to timely know a location of the terminal device. When the terminal device is paged, the mobile switching center searches all cells in the location area of the terminal device. Therefore, the terminal device may be found rapidly and accurately.

In an optional embodiment, the first area may also be any area newly defined in a future network. There are no limits made thereto in the embodiments of the disclosure.

As an optional embodiment, the first message is a location updating message and the location updating message is configured to indicate that the terminal device moves from a second area to the first area. The operation in S110 includes that: after the location updating message is received, the first network device sends the network capability information of the at least one network device to the terminal device.

Correspondingly, the operation in S210 includes that: the terminal device receives the network capability information of the at least one network device that is sent by the first network device after the location updating message is received.

Specifically, when the terminal device moves from the second area to the first area, network capability information of the second area stored in the terminal device is unavailable and the terminal device is required to update the network capability information. The terminal device may send the location updating message to the first network device in the first area and the first network device may send network capability information of network devices in the first area acquired by the first network device to the terminal device according to the location updating message.

It is to be understood that the location updating message may further include the terminal capability information of the terminal device. The first network device may determine the network capability information of the at least one network device, requested by the terminal capability information according to the terminal capability information in the location updating message and then send the network capability information of the at least one network device to the terminal device. There are no limits made thereto in the embodiments of the disclosure.

It is also to be understood that in the embodiments of the disclosure, the first message is the location updating message of the NAS. However, the location updating message is only a possible implementation mode and the first message may also be related messages of the AS, for example, the connection establishment message, the reestablishment message, the reconfiguration message or the like. There are no limits made thereto in the embodiments of the disclosure.

As an optional embodiment, before the operation inS110, the method further includes that the first network device receives the network capability information of the at least one network device from the at least one network device respectively.

As an optional embodiment, the method further includes that the first network device sends the network capability information of the first network device to a second network device in the at least one network device.

It is to be understood that the connected network devices may send their own network capability information to each other, such that after the terminal device accesses one network device, the network device accessed by the terminal device may have the network capability information of the other network device, thereby sending its own network capability information and the network capability information of the connected network device to the terminal device.

As an optional embodiment, the network capability information of the at least one network device further includes mapping information. The mapping information is configured to indicate least one of the following: a correspondence between at least one of a carrier frequency of the at least one network device or an identifier of the at least one network device and at least one of the service or the feature, or a correspondence between at least one of the carrier frequency of the at least one network device or the identifier of the at least one network device and configuration information of at least one of the service or the feature.

It is to be understood that the configuration information of at least one of the service or the feature may be configured to indicate a configuration condition of the service and/or the feature by the network device. The correspondence may be a correspondence between the carrier frequency of the at least one network device and the service and/or the feature, may be a correspondence between the identifier of the at least one network device and the service and/or the feature, may be a correspondence between the carrier frequency of the at least one network device and the configuration information of the service and/or the feature and may also be a correspondence between the identifier of the at least one network device and the configuration information of the service and/or the feature. There are no limits made thereto in the embodiments of the disclosure.

As an optional embodiment, after the operation in S210, the method further includes that: responsive to determining that the terminal device moves to a coverage of a third network device in the at least one network device, the terminal device determines whether to reside in a cell to which the third network device belongs according to network capability information of the third network device.

It is to be understood that after receiving the network capability information of the at least one network device from the first network device, the terminal device does not immediately select the cell where the third network device suitable for its own capability is located to reside because the terminal device is presently within a coverage of the first network device but may not be within the coverage area of the third network device. Only after the terminal device moves into the cell where the third network device is located, the terminal device may determine whether to reside in the cell to which the third network device belongs in combination with the network capability information of the third network device and its own terminal capability information.

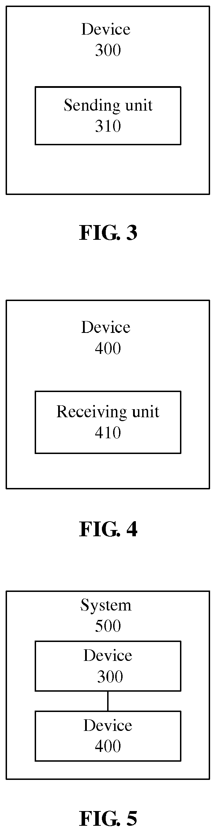

FIG. 3 is a schematic block diagram of a device 300 for information transmission according to an embodiment of the disclosure. As illustrated in FIG. 3, the device 300 includes a sending unit 310.

The sending unit 310 is configured to send network capability information of at least one network device to a terminal device. The at least one network device includes at least one of the device or a network device connected with the device.

In an optional embodiment, the network capability information may be configured to indicate at least one of a service or feature which may be supported by the at least one network device respectively.

In an optional embodiment, the sending unit 310 may specifically be configured to send the network capability information of the at least one network device to the terminal device according to information of the terminal device. The information of the terminal device includes at least one of service requirement information or user profile information of the terminal device and the network capability information of the at least one network device is requested by at least one of the service requirement information or user profile information of the terminal device.

In an optional embodiment, the device further includes a first receiving unit. The first receiving unit may be configured to, before the network capability information of the at least one network device is sent to the terminal device, receive a first message sent by the terminal device, wherein the first message is configured to request for the network capability information of the at least one network device. The sending unit may specifically be configured to, after the first message is received, send the network capability information of the at least one network device to the terminal device.

In an optional embodiment, the first message carries terminal capability information of the terminal device and the terminal capability information is configured to indicate at least one of a service or feature which is required to be supported or may be supported by the terminal device. The sending unit may further be configured to, after the terminal capability information is received, send network capability information of the at least one network device requested by the terminal capability information to the terminal device.

In an optional embodiment, the first message may be sent when the terminal device accesses the device for the first time.

In an optional embodiment, the at least one network device may include a network device covering a first area.

In an optional embodiment, the first area is a location area, the at least one network device includes the device and the location area is configured to determine a range of the area where the terminal device is located to page the terminal device.

In an optional embodiment, the first message is a location updating message and the location updating message is configured to indicate that the terminal device moves from a second area to the first area. The sending unit may specifically be configured to, after the location updating message is received, send the network capability information of the at least one network device to the terminal device.

In an optional embodiment, the sending unit may specifically be configured to send the network capability information of the at least one network device to the terminal device in a unicast, multicast or broadcast manner.

In an optional embodiment, the device further includes a second receiving unit. The second receiving unit may be configured to, before the network capability information of the at least one network device is sent to the terminal device, receive the network capability information from one or more network devices connected with the device in the at least one network device respectively.

In an optional embodiment, the sending unit may further be configured to send the network capability information of the device to a second network device in the at least one network device.

In an optional embodiment, the network capability information of the at least one network device further includes mapping information. The mapping information is configured to indicate at least one of the following: a correspondence between at least one of a carrier frequency of the at least one network device or an identifier of the at least one network device and at least one of the service or the feature, or a correspondence between at least one of the carrier frequency of the at least one network device or the identifier of the at least one network device and configuration information of at least one of the service or the feature.

In an optional embodiment, the device may be a core network device or an access network device.

In an optional embodiment, the service includes at least one of a broadcast multicast service, a VoLTE service or a D2D service. The feature includes at least one of a carrier aggregation feature, an LAA feature, a dual connectivity feature or a local/base station cache feature.

It is to be understood that the device 300 described herein is embodied in form of functional modules. Term "unit" mentioned herein may refer to an Application Specific Integrated Circuit (ASIC), an electronic circuit, a processor (for example, a shared processor, a dedicated processor or a group processor) and a memory configured to execute one or more software or firmware programs, a merged logic circuit and/or another proper component supporting the described functions. In an optional example, those skilled in the art may know that the device 300 may specifically be the first network device in the abovementioned embodiments and the device 300 may be configured to execute each flow and/or operations corresponding to the first network device in the abovementioned method embodiments, which will not be elaborated herein for avoiding repetitions.

FIG. 4 is a schematic block diagram of a device 400 for information transmission according to an embodiment of the disclosure. As illustrated in FIG. 4, the device 400 includes a receiving unit 410.

The receiving unit 410 is configured to receive network capability information of at least one network device from a first network device.The at least one network device includes at least one of the first network device or a network device connected with the first network device.

In an optional embodiment, the network capability information of the at least one network device is configured to indicate at least one of a service or feature which may be supported by the at least one network device respectively.

In an optional embodiment, the receiving unit may specifically be configured to receive the network capability information of the at least one network device that is sent by the first network device according to information of the device. The information of the device includes at least one of service requirement information or user profile information of the device, and at least one of a service or feature corresponding to the network capability information of the at least one network device is requested by at least one of the service requirement information or user profile information of the device.

In an optional embodiment, the device further includes a sending unit. The sending unit may be configured to, before the network capability information of the at least one network device is received from the first network device, send a first message sent to the first network device, wherein the first message is configured to request for the network capability information of the at least one network device. The receiving unit may specifically be configured to receive the network capability information, sent by the first network device after the first message is received, of the at least one network device.

In an optional embodiment, the first message carries terminal capability information of the device and the terminal capability information is configured to indicateat least one of a service or feature which is required to be supported or may be supported by the device. The sending unit may specifically be configured to receive the network capability information, sent by the first network device after the terminal capability information is received, of the at least one network device.

In an optional embodiment, the at least one network device may include a network device covering a first area.

In an optional embodiment, the first area is a location area, the at least one network device includes the first network device and the location area is configured to determine a range of the area where the device is located to page the device.

In an optional embodiment, the first message is a location updating message and the location updating message is configured to indicate that the device moves from a second area to the first area. The receiving unit may specifically be configured to receive the network capability information, sent by the first network device after the location updating message is received, of the at least one network device.

In an optional embodiment, the receiving unit may specifically be configured to receive the network capability information of the at least one network device that is sent by the first network device in a unicast, multicast or broadcast manner.

In an optional embodiment, the device further includes a determination unit. The determination unit may be configured to, after the network capability information of the at least one network device is received from the first network device, responsive to determining that the device moves to a coverage of the second network device in the at least one network device, determine whether to reside in a cell to which the second network device belongs according to network capability information of the second network device.

In an optional embodiment, the network capability information of the at least one network device further includes mapping information. The mapping information is configured to indicate at least one of a correspondence between at least one of a carrier frequency of the at least one network device or an identifier of the at least one network device and at least one of the service or the feature, or a correspondence between at least one of the carrier frequency of the at least one network device or the identifier of the at least one network device and configuration information of at least one of the service or the feature.

In an optional embodiment, the first network device may be a core network device or an access network device.

In an optional embodiment, the service includes at least one of a broadcast multicast service, a VoLTE service or a D2D service. The feature includes at least one of a carrier aggregation feature, an LAA feature, a dual connectivity feature or a local/base station cache feature.

It is to be understood that the device 400 described herein is embodied in form of functional modules. Term "unit" mentioned herein may refer to an ASIC, an electronic circuit, a processor (for example, a shared processor, a dedicated processor or a group processor) and memory configured to execute one or more software or firmware programs, a merged logic circuit and/or another proper component supporting the described functions. In an optional example, those skilled in the art may know that the device 400 may specifically be the terminal device in the abovementioned embodiments and the device 400 may be configured to execute each flow and/or operations corresponding to the terminal device in the abovementioned method embodiments, which will not be elaborated herein for avoiding repetitions.

FIG. 5 is a schematic block diagram of a system 500 for information transmission according to an embodiment of the disclosure. As illustrated in FIG. 5, the communication system 500 includes a device 300 and a device 400.

The device 300 is configured to execute each flow and/or operation corresponding to the first network device in the abovementioned method embodiments and the device 400 is configured to execute each flow and/or operation corresponding to the terminal device in the abovementioned method embodiments. No more elaborations will be made herein to avoid repetitions. In an optional example, those skilled in the art may know that the device 300 may specifically be the first network device in the abovementioned embodiments and the device 400 may specifically be the terminal device in the abovementioned embodiments.

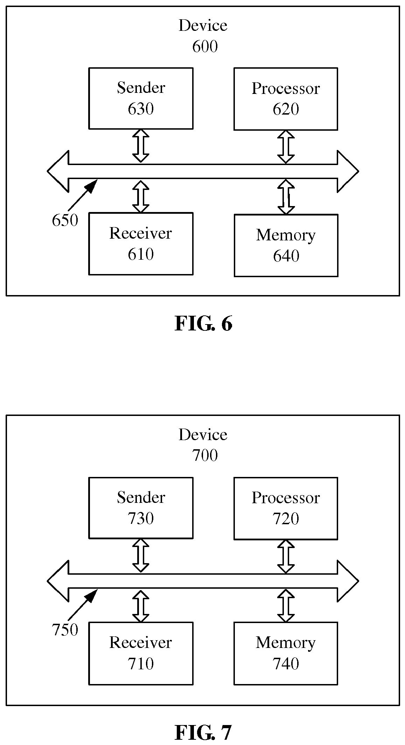

FIG. 6 illustrates a device 600 for information transmission according to an embodiment of the disclosure. The device 600 includes a receiver 610, a processor 620, a sender 630, a memory 640 and a bus system 650. The receiver 610, the processor 620, the sender 630 and the memory 640 are connected through the bus system 650. The memory 640 is configured to store an instruction. The processor 620 is configured to execute the instruction stored in the memory 640 to control the receiver 610 to receive a signal and control the sender 630 to send an instruction.

The sender 630 is configured to send network capability information of at least one network device to a terminal device. The at least one network device includes at least one of the device or a network device connected with the device.

In an optional embodiment, the network capability information is configured to indicate at least one of a service or feature which may be supported by the at least one network device respectively.

In an optional embodiment, the network capability information of the at least one network device is network capability information required by the terminal device. The sender 630 is specifically configured to send the network capability information of the at least one network device to the terminal device according to information of the terminal device. The information of the terminal device includes at least one of service requirement information or user profile information of the terminal device and the network capability information of the at least one network device is requested by at least one of the service requirement information or user profile information of the terminal device.

In an optional embodiment, the receiver 610 is configured to, before the network capability information of the at least one network device is sent to the terminal device, receive a first message sent by the terminal device. The first message is configured to request for the network capability information of the at least one network device. The sender 630 is specifically configured to, after the first message is received, send the network capability information of the at least one network device to the terminal device.

In an optional embodiment, the first message carries terminal capability information of the terminal device and the terminal capability information is configured to indicate at least one of a service or feature which is required to be supported or may be supported by the terminal device. The sender 630 is further configured to, after the terminal capability information is received, send to the terminal device network capability information of the at least one network device requested by the terminal capability information.

In an optional embodiment, the first message is sent when the terminal device accesses the device for the first time.

In an optional embodiment, the at least one network device includes a network device covering a first area.

In an optional embodiment, the first area is a location area, the at least one network device includes the device and the location area is configured to determine a range of the area where the terminal device is located to page the terminal device.

In an optional embodiment, the first message is a location updating message and the location updating message is configured to indicate that the terminal device moves from a second area to the first area. The sender 630 is specifically configured to, after the location updating message is received, send the network capability information of the at least one network device to the terminal device.

In an optional embodiment, the sender 630 is specifically configured to send the network capability information of the at least one network device to the terminal device in a unicast, multicast or broadcast manner.

In an optional embodiment, the receiver 610 is further configured to, before the network capability information of the at least one network device is sent to the terminal device, receive the network capability information from the network devices connected with the device in the at least one network device respectively.

In an optional embodiment, the sender 630 is further configured to send the network capability information of the device to a second network device in the at least one network device.

In an optional embodiment, the network capability information of the at least one network device further includes mapping information. The mapping information is configured to indicate at least one of a correspondence between at least one of a carrier frequency of the at least one network device or an identifier of the at least one network device and at least one of the service or the feature, or a correspondence between at least one of the carrier frequency of the at least one network device or the identifier of the at least one network device and configuration information of at least one of the service or the feature.

In an optional embodiment, the device is a core network device or an access network device.

In an optional embodiment, the service includes at least one of a broadcast multicast service, a VoLTE service or a D2D service. The feature includes at least one of a carrier aggregation feature, an LAA feature, a dual connectivity feature or a local/base station cache feature.

It is to be understood that the device 600 may specifically be the first network device in the abovementioned embodiments and may be configured to execute each operation and/or flow corresponding to the first network device in the abovementioned method embodiments. In an optional embodiment, the memory 640 may include a Read-Only Memory (ROM) and a Random Access Memory (RAM) and provides an instruction and data to the processor. A part of the memory may further include a nonvolatile RAM. For example, the memory may further store information of a device type. The processor 620 may be configured to execute the instruction stored in the memory. When the processor executes the instruction, the processor may execute each operation corresponding to the first network device in the abovementioned method embodiments.

FIG. 7 illustrates an information transmission device 700 according to an embodiment of the disclosure. For example, the device 700 may be a terminal device. The device 700 includes a receiver 710, a processor 720, a sender 730, a memory 740 and a bus system 750. The receiver 710, the processor 720, the sender 730 and the memory 740 are connected through the bus system 750. The memory 740 is configured to store an instruction. The processor 720 is configured to execute the instruction stored in the memory 740 to control the receiver 710 to receive a signal and control the sender 730 to send an instruction.

The receiver 710 is configured to receive network capability information of at least one network device from a first network device. The at least one network device includes at least one of the first network device or a network device connected with the first network device.

In an optional embodiment, the network capability information of the at least one network device is configured to indicate at least one of a service or feature which may be supported by the at least one network device respectively.

In an optional embodiment, the receiver 710 is specifically configured to receive the network capability information of the at least one network device sent by the first network device according to information of the device. The information of the device includes at least one of service requirement information or user profile information of the device, and at least one of a service or feature corresponding to the network capability information of the at least one network device is requested by at least one of the service requirement information or user profile information of the device.

In an optional embodiment, the sender 730 is configured to, before the network capability information of the at least one network device is received from the first network device, send a first message sent to the first network device. The first message is configured to request for the network capability information of the at least one network device. The receiver 710 is specifically configured to receive the network capability information of the at least one network device sent by the first network device after the first message is received.

In an optional embodiment, the first message carries terminal capability information of the device and the terminal capability information is configured to indicate at least one of a service or feature which is required to be supported or may be supported by the device. The receiver 710 is specifically configured to receive the network capability information of the at least one network device that is sent by the first network device after the terminal capability information is received.

In an optional embodiment, the at least one network device includes a network device covering a first area.

In an optional embodiment, the first area is a location area, the at least one network device includes the first network device and the location area is configured to determine a range of the area where the device is located to page the device.

In an optional embodiment, the first message is a location updating message and the location updating message is configured to indicate that the device moves from a second area to the first area. The receiver 710 is specifically configured to receive the network capability information, sent by the first network device after the location updating message is received, of the at least one network device.

In an optional embodiment, the receiver 710 is specifically configured to receive the network capability information of the at least one network device sent by the first network device in a unicast, multicast or broadcast manner.

In an optional embodiment, the processor 720 is configured to, after the network capability information of the at least one network device is received from the first network device, responsive to determining that the device moves to a coverage of the second network device in the at least one network device, determine whether to reside in a cell to which the second network device belongs according to network capability information of the second network device.

In an optional embodiment, the network capability information of the at least one network device further includes mapping information. The mapping information is configured to indicate at least one of a correspondence between at least one of a carrier frequency of the at least one network device or an identifier of the at least one network device and at least one of the service or the feature, or a correspondence between at least one of the carrier frequency of the at least one network device or the identifier of the at least one network device and configuration information of at least one of the service or the feature.

In an optional embodiment, the first network device is a core network device or an access network device.

In an optional embodiment, the service includes at least one of a broadcast multicast service, a VoLTE service or a D2D service. The feature includes at least one of a carrier aggregation feature, an LAA feature, a dual connectivity feature or a local/base station cache feature.

It is to be understood that the device 700 may specifically be the terminal device in the abovementioned embodiments and may be configured to execute each operation and/or flow corresponding to the terminal device in the abovementioned method embodiments. In an optional embodiment, the memory 740 may include a ROM and a RAM and provides an instruction and data to the processor. A part of the memory may further include a nonvolatile RAM. For example, the memory may further store information of a device type. The processor 720 may be configured to execute the instruction stored in the memory, and when the processor executes the instruction, the processor may execute each operation corresponding to the terminal device in the abovementioned method embodiments.

It is to be understood that in the embodiments of the disclosure, the processor 620 and the processor 720 may be Central Processing Units (CPUs) and the processor may also be another universal processor, a Digital Signal Processor (DSP), an ASIC, a Field-Programmable Gate Array (FPGA) or another programmable logic device, discrete gate or transistor logic device and discrete hardware component and the like. The universal processor may be a microprocessor or the processor may also be any conventional processor and the like.

It is to be understood that term "and/or" in the disclosure is only an association relationship describing associated objects and represents that three relationships may exist. For example, A and/or B may represent three conditions: i.e., independent existence of A, existence of both A and B and independent existence of B. In addition, character "/" in the disclosure usually represents that previous and next associated objects form an "or" relationship.

It is to be understood that, in various embodiments of the disclosure, a magnitude of a sequence number of each process does not mean an execution sequence and the execution sequence of each process should be determined by its function and an internal logic and should not form any limit to an implementation process of the embodiments of the disclosure.

Those of ordinary skill in the art may realize that the units and algorithm operations of each example described in combination with the embodiments disclosed in the disclosure may be implemented by electronic hardware or a combination of computer software and the electronic hardware. Whether these functions are executed in a hardware or software manner depends on specific applications and design constraints of the technical solutions. Professionals may realize the described functions for each specific application by use of different methods, but such realization shall fall within the scope of the disclosure.

Those skilled in the art may clearly learn about that specific working processes of the system, device and unit described above may refer to the corresponding processes in the method embodiment and will not be elaborated herein for convenient and brief description.

In some embodiments provided by the disclosure, it is to be understood that the disclosed system, device and method may be implemented in another manner. For example, the device embodiment described above is only schematic, and for example, division of the units is only logic function division, and other division manners may be adopted during practical implementation. For example, multiple units or components may be combined or integrated into another system, or some characteristics may be neglected or not executed. In addition, coupling or direct coupling or communication connection between each displayed or discussed component may be indirect coupling or communication connection, implemented through some interfaces, of the device or the units, and may be electrical and mechanical or adopt other forms.

The units described as separate parts may or may not be physically separated, and parts displayed as units may or may not be physical units, and namely may be located in the same place, or may also be distributed to multiple network units. Part or all of the units may be selected to achieve the purpose of the solutions of the embodiments according to a practical requirement.

In addition, each functional unit in each embodiment of the disclosure may be integrated into a processing unit, each unit may also physically exist independently, and two or more than two units may also be integrated into a unit.

When being realized in form of software functional unit and sold or used as an independent product, the function may also be stored in a computer-readable storage medium. Based on such an understanding, the technical solutions of the disclosure substantially or parts making contributions to the conventional art or part of the technical solutions may be embodied in form of software product, and the computer software product is stored in a storage medium, including a plurality of instructions configured to enable a computer device (which may be a personal computer, a server, a network device or the like) to execute all or part of the operations of the method in each embodiment of the disclosure. The abovementioned storage medium includes: various media capable of storing program codes such as a U disk, a mobile hard disk, a ROM, a RAM, a magnetic disk or an optical disk.

The above is only the specific implementation mode of the disclosure and not intended to limit the scope of protection of the disclosure. Any variations or replacements apparent to those skilled in the art within the technical scope disclosed by the disclosure shall fall within the scope of protection of the disclosure. Therefore, the scope of protection of the disclosure shall be subject to the scope of protection of the claims.

## Claims

1. A method for information transmission, wherein the method comprises:
sending (S 110), by a first network device, network capability information of at least one network device to a terminal device according to information of the terminal device, wherein the information of the terminal device comprises user profile information of the terminal device, the network capability information being to indicate at least one of a service or a feature that the at least one network device is capable of supporting, and the network capability information comprising mapping information, and the mapping information is configured to indicate at least one of the following: a correspondence between a carrier frequency of the at least one network device and at least one of the service or the feature; or a correspondence between the carrier frequency of the at least one network device and configuration information of at least one of the service or the feature,
wherein the at least one network device comprises at least one of the first network device or a network device connected with the first network device.

2. The method of claim 1, before sending (S110), by the first network device, the network capability information of the at least one network device to the terminal device, further comprising:
receiving, by the first network device, a first message sent by the terminal device, wherein the first message is configured to request for the network capability information of the at least one network device,
wherein sending (S110), by the first network device, the network capability information of the at least one network device to the terminal device comprises:
after the first message is received, sending, by the first network device, the network capability information of the at least one network device to the terminal device.

3. The method of claim 2, wherein the at least one network device comprises a network device covering a first area, the first area is a location area, the at least one network device comprises the first network device, the location area is configured to determine a range of the area where the terminal device is located, the first message is a location updating message and the location updating message is configured to indicate that the terminal device moves from a second area to the first area; and
sending (S110), by the first network device, the network capability information of the at least one network device to the terminal device comprises:
after the location updating message is received, sending, by the first network device, the network capability information of the at least one network device to the terminal device.

4. A method for information transmission, wherein the method comprises:
receiving (S210), by a terminal device, network capability information of at least one network device that is sent by a first network device according to information of the terminal device, wherein the information of the terminal device comprises user profile information of the terminal device, the network capability information being to indicate at least one of a service or a feature that the at least one network device is capable of supporting, and the network capability information comprising mapping information, and the mapping information is configured to indicate at least one of the following: a correspondence between a carrier frequency of the at least one network device and at least one of the service or the feature; or a correspondence between the carrier frequency of the at least one network device and configuration information of at least one of the service or the feature,
wherein the at least one network device comprises at least one of the first network device or a network device connected with the first network device.

5. The method of claim 4, before receiving (S210), by the terminal device, the network capability information of the at least one network device from the first network device, further comprising:
sending, by the terminal device, a first message to the first network device, wherein the first message is configured to request for the network capability information of the at least one network device,
wherein receiving (S210), by the terminal device, the network capability information of the at least one network device from the first network device comprises:
receiving, by the terminal device, the network capability information, sent by the first network device after the first message is received, of the at least one network device.

6. The method of claim 4 or 5, wherein the at least one network device comprises a network device covering a first area, the first area is a location area, the at least one network device comprises the first network device and the location area is configured to determine a range of the area where the terminal device is located.

7. The method of claim 5, wherein the first message is a location updating message and the location updating message is configured to indicate that the terminal device moves from a second area to the first area; and
receiving (S210), by the terminal device, the network capability information of the at least one network device from the first network device comprises:
receiving, by the terminal device, the network capability information, sent by the first network device after the location updating message is received, of the at least one network device.

8. The method of any one of claims 4-7, wherein receiving (S210), by the terminal device, the network capability information of the at least one network device from the first network device comprises:
receiving, by the terminal device, the network capability information of the at least one network device that is sent by the first network device in a unicast, multicast or broadcast manner.

9. The method of any one of claims 4-8, after receiving (S210), by the terminal device, the network capability information of the at least one network device from the first network device, further comprising:
responsive to determining that the terminal device moves to a coverage of a second network device in the at least one network device, determining, by the terminal device, whether to reside in a cell to which the second network device belongs according to network capability information of the second network device.

10. The method of any one of claims 4-9, wherein the service comprises at least one of the following: a broadcast multicast service, a Voice over Long Term Evolution, VoLTE, service or a Device to Device, D2D, service; and
the feature comprises at least one of the following: a carrier aggregation feature, a Licensed-Assisted Access, LAA, feature, a dual connectivity feature or a local/base station cache feature.

11. A device (700) for information transmission, comprising:
a memory (740); and
a processor (720), configured to execute an instruction stored in the memory (740) to enable the device to execute the method according to any one of claims 4-10.

## Patentansprüche

1. Verfahren zur Informationsübertragung, wobei das Verfahren Folgendes umfasst:
Senden (S110) durch eine erste Netzvorrichtung von Netzfähigkeitsinformationen wenigstens einer Netzvorrichtung an eine Endgerätvorrichtung gemäß den Informationen der Endgerätvorrichtung, wobei die Informationen der Endgerätvorrichtung Anwenderprofilinformationen der Endgerätvorrichtung umfassen, die Netzfähigkeitsinformationen eines Dienstes und/oder eines Merkmals angeben, den bzw. das die wenigstens eine Netzvorrichtung unterstützen kann, und die Netzfähigkeitsinformationen Abbildungsinformationen umfassen, wobei die Abbildungsinformationen konfiguriert sind, wenigstens eines der Folgenden anzugeben: eine Übereinstimmung zwischen einer Trägerfrequenz der wenigstens einen Netzvorrichtung und wenigstens eines des Dienstes oder des Merkmals; oder eine Übereinstimmung zwischen der Trägerfrequenz der wenigstens einen Netzvorrichtung und den Konfigurationsinformationen des Dienstes und/oder des Merkmals,
wobei die wenigstens eine Netzvorrichtung wenigstens eine der ersten Netzvorrichtung oder einer Netzvorrichtung, die mit der ersten Netzvorrichtung verbunden ist, umfasst.

2. Verfahren nach Anspruch 1, das vor dem Senden (S110) durch die erste Netzvorrichtung der Netzfähigkeitsinformationen der wenigstens einen Netzvorrichtung an die Endgerätvorrichtung ferner Folgendes umfasst:
Empfangen durch die erste Netzvorrichtung einer ersten Nachricht, die durch die Endgerätvorrichtung gesendet wird, wobei die erste Nachricht konfiguriert ist, die Netzfähigkeitsinformationen der wenigstens einen Netzvorrichtung anzufordern,
wobei das Senden (S110) durch die erste Netzvorrichtung der Netzfähigkeitsinformationen der wenigstens einen Netzvorrichtung an die Endgerätvorrichtung Folgendes umfasst:
nachdem die erste Nachricht empfangen worden ist, Senden durch die erste Netzvorrichtung der Netzfähigkeitsinformationen der wenigstens einen Netzvorrichtung an die Endgerätvorrichtung.

3. Verfahren nach Anspruch 2, wobei die wenigstens eine Netzvorrichtung eine Netzvorrichtung umfasst, die einen ersten Bereich abdeckt, der erste Bereich ein Ortsbereich ist, die wenigstens eine Netzvorrichtung die erste Netzvorrichtung umfasst, der Ortsbereich konfiguriert ist, eine Ausdehnung des Bereichs zu bestimmen, wo sich die Endgerätvorrichtung befindet, die erste Nachricht eine Ortsaktualisierungsnachricht ist und die Ortsaktualisierungsnachricht konfiguriert ist, anzugeben, dass sich die Endgerätvorrichtung von einem zweiten Bereich zu dem ersten Bereich bewegt; und
das Senden (S110) durch die erste Netzvorrichtung der Netzfähigkeitsinformationen der wenigstens einen Netzvorrichtung an die Endgerätvorrichtung Folgendes umfasst:
nachdem die Ortaktualisierungsnachricht empfangen worden ist, Senden durch die erste Netzvorrichtung der Netzfähigkeitsinformationen der wenigstens einen Netzvorrichtung an die Endgerätvorrichtung.

4. Verfahren zur Informationsübertragung, wobei das Verfahren Folgendes umfasst:
Empfangen (S210) durch die Endgerätvorrichtung von Netzfähigkeitsinformationen wenigstens einer Netzvorrichtung, die durch eine erste Netzvorrichtung gesendet werden, gemäß den Informationen der Endgerätvorrichtung, wobei die Informationen der Endgerätvorrichtung Anwenderprofilinformationen der Endgerätvorrichtung umfassen, die Netzfähigkeitsinformationen eines Dienstes und/oder eines Merkmals angeben, den bzw. das die wenigstens eine Netzvorrichtung unterstützen kann, und die Netzfähigkeitsinformationen Abbildungsinformationen umfassen, wobei die Abbildungsinformationen konfiguriert sind, wenigstens eines der Folgenden anzugeben: eine Übereinstimmung zwischen einer Trägerfrequenz der wenigstens einen Netzvorrichtung und des Dienstes und/oder des Merkmals; oder eine Übereinstimmung zwischen der Trägerfrequenz der wenigstens einen Netzvorrichtung und den Konfigurationsinformationen des Dienstes und/oder des Merkmals,
wobei die wenigstens eine Netzvorrichtung wenigstens eine der ersten Netzvorrichtung oder einer Netzvorrichtung, die mit der ersten Netzvorrichtung verbunden ist, umfasst.

5. Verfahren nach Anspruch 4, das vor dem Empfangen (S210) durch die Endgerätvorrichtung der Netzfähigkeitsinformationen der wenigstens einen Netzvorrichtung von der ersten Netzvorrichtung ferner Folgendes umfasst:
Senden durch die Endgerätvorrichtung einer ersten Nachricht an die erste Netzvorrichtung, wobei die erste Nachricht konfiguriert ist, die Netzfähigkeitsinformationen der wenigstens einen Netzvorrichtung anzufordern,
wobei das Empfangen (S210) durch die Endgerätvorrichtung der Netzfähigkeitsinformationen der wenigstens einen Netzvorrichtung von der ersten Netzvorrichtung Folgendes umfasst:
Empfangen durch die Endgerätvorrichtung der Netzfähigkeitsinformationen der wenigstens einen Netzvorrichtung, die durch die erste Netzvorrichtung gesendet werden, nachdem die erste Nachricht empfangen worden ist.

6. Verfahren nach Anspruch 4 oder 5, wobei die wenigstens eine Netzvorrichtung eine Netzvorrichtung umfasst, die einen ersten Bereich abdeckt, der erste Bereich ein Ortsbereich ist, die wenigstens eine Netzvorrichtung die erste Netzvorrichtung umfasst und der Ortsbereich konfiguriert ist, eine Ausdehnung des Bereichs zu bestimmen, wo sich die Endgerätvorrichtung befindet.

7. Verfahren nach Anspruch 5, wobei die erste Nachricht eine Ortsaktualisierungsnachricht ist und die Ortsaktualisierungsnachricht konfiguriert ist, anzugeben, dass sich die Endgerätvorrichtung von einem zweiten Bereich zu dem ersten Bereich bewegt; und
das Empfangen (S210) durch die Endgerätvorrichtung der Netzfähigkeitsinformationen der wenigstens einen Netzvorrichtung von der ersten Netzvorrichtung Folgendes umfasst:
Empfangen durch die Endgerätvorrichtung der Netzfähigkeitsinformationen der wenigstens einen Netzvorrichtung, die durch die erste Netzvorrichtung gesendet werden, nachdem die Ortsaktualisierungsnachricht empfangen worden ist.

8. Verfahren nach einem der Ansprüche 4-7, wobei das Empfangen (S210) durch die Endgerätvorrichtung der Netzfähigkeitsinformationen der wenigstens einen Netzvorrichtung von der ersten Netzvorrichtung Folgendes umfasst:
Empfangen durch die Endgerätvorrichtung der Netzfähigkeitsinformationen der wenigstens einen Netzvorrichtung, die durch die erste Netzvorrichtung in durch Unicast, Multicast oder Broadcast gesendet werden.

9. Verfahren nach einem der Ansprüche 4-8, das nach dem Empfangen (S210) durch die Endgerätvorrichtung der Netzfähigkeitsinformationen der wenigstens einen Netzvorrichtung von der ersten Netzvorrichtung ferner Folgendes umfasst:
in Reaktion auf das Bestimmen, dass sich die Endgerätvorrichtung zu einer Abdeckung einer zweiten Netzvorrichtung bewegt, in der wenigstens einen Netzvorrichtung Bestimmen durch die Endgerätvorrichtung, ob sie sich in einer Zelle aufhalten soll, zu der die zweite Netzvorrichtung gehört, gemäß den Netzfähigkeitsinformationen der zweiten Netzvorrichtung.

10. Verfahren nach einem der Ansprüche 4-9, wobei der Dienst wenigstens einen der Folgenden umfasst: einen Broadcast-Multicast-Dienst, einen Sprache-überlangfristige-Entwicklung-Dienst, VoLTE-Dienst, oder einen Vorrichtung-zu-Vorrichtung-Dienst, D2D-Dienst; und
das Merkmal wenigstens eines der Folgenden umfasst: ein Trägeransammlungsmerkmal, ein Merkmal des lizenzunterstützten Zugriffs, LAA-Merkmal, ein Doppelverbindbarkeitsmerkmal oder ein Merkmal eines lokalen/Basisstation-Caches.

11. Vorrichtung (700) zur Informationsübertragung, die Folgendes umfasst:
einen Speicher (740); und
einen Prozessor (720), der konfiguriert ist, eine Anweisung auszuführen, die in dem Speicher (740) gespeichert ist, um die Vorrichtung zu befähigen, das Verfahren nach einem der Ansprüche 4-10 auszuführen.

## Revendications

1. Procédé de transmission d'informations, le procédé comprenant :
l'envoi (S110), par un premier dispositif de réseau, d'informations de capabilité réseau d'au moins un dispositif de réseau à un dispositif terminal conformément à des informations du dispositif terminal, dans lequel les informations du dispositif terminal comprennent des informations de profil utilisateur du dispositif terminal, les informations de capabilité réseau servant à indiquer au moins un service ou une fonctionnalité que l'au moins un dispositif de réseau est en mesure de prendre en charge et les informations de capabilité réseau comprenant des informations de mappage, et les informations de mappage sont configurées pour indiquer au moins : une correspondance entre une fréquence porteuse de l'au moins un dispositif de réseau et l'au moins un service ou fonctionnalité ; ou une correspondance entre la fréquence porteuse de l'au moins un dispositif de réseau et des informations de configuration de l'au moins un service ou fonctionnalité,
dans lequel l'au moins un dispositif de réseau comprend au moins le premier dispositif de réseau ou un dispositif de réseau connecté au premier dispositif de réseau.

2. Procédé selon la revendication 1, comprenant en outre, avant l'envoi (S110), par le premier dispositif de réseau, des informations de capabilité réseau de l'au moins un dispositif de réseau au dispositif terminal :
la réception, par le premier dispositif de réseau, d'un premier message envoyé par le dispositif terminal, le premier message étant configuré pour demander les informations de capabilité réseau de l'au moins un dispositif de réseau,
dans lequel l'envoi (S110), par le premier dispositif de réseau, des informations de capabilité réseau de l'au moins un dispositif de réseau au dispositif terminal comprend :
après la réception du premier message, l'envoi, par le premier dispositif de réseau, des informations de capabilité réseau de l'au moins un dispositif de réseau au dispositif terminal.

3. Procédé selon la revendication 2, dans lequel l'au moins un dispositif de réseau comprend un dispositif de réseau couvrant une première zone, la première zone est une zone d'emplacement, l'au moins un dispositif réseau comprend le premier dispositif réseau, la zone d'emplacement est configurée pour déterminer une plage de la zone où se trouve le dispositif terminal, le premier message est un message de mise à jour d'emplacement et le message de mise à jour d'emplacement est configuré pour indiquer que le dispositif terminal se déplace d'une seconde zone vers la première zone ; et
l'envoi (S110), par le premier dispositif de réseau, des informations de capabilité réseau de l'au moins un dispositif de réseau au dispositif terminal comprend :
après la réception du message de mise à jour d'emplacement, l'envoi, par le premier dispositif de réseau, des informations de capabilité réseau de l'au moins un dispositif de réseau au dispositif terminal.

4. Procédé de transmission d'informations, le procédé comprenant :
la réception (S210), par un dispositif terminal, d'informations de capabilité réseau d'au moins un dispositif de réseau qui sont envoyées par un premier dispositif de réseau en fonction d'informations du dispositif terminal, dans lequel les informations du dispositif terminal comprennent des informations de profil utilisateur du dispositif terminal, les informations de capabilité réseau servant à indiquer au moins un service ou une fonctionnalité que l'au moins un dispositif de réseau est capable de prendre en charge, et les informations de capabilité réseau comprenant des informations de mappage, et les informations de mappage sont configurées pour indiquer au moins : une correspondance entre une fréquence porteuse de l'au moins un dispositif de réseau et l'au moins un service ou fonctionnalité ; ou une correspondance entre la fréquence porteuse de l'au moins un dispositif de réseau et les informations de configuration de l'au moins un service ou fonctionnalité,
dans lequel l'au moins un dispositif de réseau comprend au moins un dispositif de réseau ou un dispositif de réseau connecté au premier dispositif de réseau.

5. Procédé selon la revendication 4, comprenant en outre, avant la réception (S210), par le dispositif terminal, des informations de capabilité réseau de l'au moins un dispositif de réseau à partir du premier dispositif de réseau :
l'envoi, par le dispositif terminal, d'un premier message au premier dispositif de réseau, le premier message étant configuré pour demander les informations de capabilité réseau de l'au moins un dispositif de réseau,
dans lequel la réception (S210), par le dispositif terminal, des informations de capabilité réseau de l'au moins un dispositif de réseau à partir du premier dispositif de réseau comprend :
la réception, par le dispositif terminal, des informations de capabilité réseau, envoyées par le premier dispositif de réseau après la réception du premier message, de l'au moins un dispositif de réseau.

6. Procédé selon la revendication 4 ou 5, dans lequel l'au moins un dispositif de réseau comprend un dispositif de réseau couvrant une première zone, la première zone est une zone d'emplacement, l'au moins un dispositif réseau comprend le premier dispositif de réseau et la zone d'emplacement est configurée pour déterminer une plage de la zone où se trouve le dispositif terminal.

7. Procédé selon la revendication 5, dans lequel le premier message est un message de mise à jour d'emplacement et le message de mise à jour d'emplacement est configuré pour indiquer que le dispositif terminal se déplace d'une seconde zone vers la première zone ; et
la réception (S210), par le dispositif terminal, des informations de capabilité réseau de l'au moins un dispositif de réseau à partir du premier dispositif de réseau comprend :
la réception, par le dispositif terminal, des informations de capabilité réseau, envoyées par le premier dispositif de réseau après la réception du message de mise à jour d'emplacement, de l'au moins un dispositif de réseau.

8. Procédé selon l'une quelconque des revendications 4 à 7, dans lequel la réception (S210), par le dispositif terminal, des informations de capabilité réseau de l'au moins un dispositif réseau à partir du premier dispositif réseau comprend :
la réception, par le dispositif terminal, des informations de capabilité réseau de l'au moins un dispositif de réseau qui sont envoyées par le premier dispositif de réseau par unidiffusion, multidiffusion ou diffusion.

9. Procédé selon l'une quelconque des revendications 4 à 8, comprenant en outre, après la réception (S210), par le dispositif terminal, des informations de capabilité réseau de l'au moins un dispositif réseau à partir du premier dispositif réseau :
en réponse à la détermination que le dispositif terminal se déplace vers une couverture d'un deuxième dispositif de réseau dans l'au moins un dispositif de réseau, la détermination, par le dispositif terminal, qu'il doit résider ou non dans une cellule à laquelle appartient le deuxième dispositif de réseau en fonction des informations de capabilité réseau du deuxième dispositif de réseau.

10. Procédé selon l'une quelconque des revendications 4 à 9, dans lequel le service comprend au moins : un service de diffusion/multidiffusion, un service VoLTE (voix sur réseau d'évolution à long terme), ou service de dispositif à dispositif, D2D ; et
la fonctionnalité comprend au moins : une fonctionnalité d'agrégation d'opérateurs, une fonction LAA (accès assisté par licence), une fonctionnalité de double connectivité ou une fonctionnalité de cache local/de station de base.

11. Dispositif (700) de transmission d'informations, comprenant :
une mémoire (740) ; et
un processeur (720), configuré pour exécuter une instruction stockée dans la mémoire (740) pour permettre au dispositif d'exécuter le procédé selon l'une quelconque des revendications 4 à 10.
